**Europäisches Patentamt**

**European Patent Office**

**Office européen des brevets**

(19)

(11) Veröffentlichungsnummer: **0 314 916 B1**

# (12) EUROPÄISCHE PATENTSCHRIFT

(45) Veröffentlichungstag der Patentschrift :
**14.08.91 Patentblatt 91/33**

(51) Int. Cl.$^5$ : **A01G 9/14**

(21) Anmeldenummer : **88115815.8**

(22) Anmeldetag : **26.09.88**

(54) **Pflanztisch für Gartenbaubetriebe.**

(30) Priorität : **04.11.87 DE 3737300**

(43) Veröffentlichungstag der Anmeldung :
**10.05.89 Patentblatt 89/19**

(45) Bekanntmachung des Hinweises auf die
Patenterteilung :
**14.08.91 Patentblatt 91/33**

(84) Benannte Vertragsstaaten :
**AT BE CH DE ES FR GB IT LI NL SE**

(56) Entgegenhaltungen :
**DE-A- 3 534 434**

(56) Entgegenhaltungen :
**FR-A- 2 233 260**
**FR-A- 2 582 188**
**NL-A- 8 700 172**
**US-A- 1 753 980**

(73) Patentinhaber : **Caroe, Claus J.**
**Blalersvej 81**
**DK-2990 Niva (DK)**

(72) Erfinder : **Caroe, Claus J.**
**Blalersvej 81**
**DK-2990 Niva (DK)**

(74) Vertreter : **Habbel, Hans-Georg, Dipl.-Ing.**
**Postfach 3429 Am Kanonengraben 11**
**W-4400 Münster (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 314 916 B1

## Beschreibung

Die Erfindung bezieht sich auf einen Pflanztisch gemäß dem Oberbegriff des Patentanspruches 1.

Aus der DE-A-3415716 A1 ist ein Pflanztisch bekannt, der im wesentlichen aus einem Stützgestell mit Stützrahmen besteht, die zur Aufnahme der langgestreckt ausgebildeten Pflanztröge ausgebildet sind. Die Pflanztröge werden auf diese Stützrahmen aufgestellt und überragen dabei die Stützrahmen nach beiden Seiten. Die Pflanztröge weisen eine sehr große Länge auf und sind daher üblicherweise nicht von einer Bedienungsperson handhabbar, sondern müssen von zwei Bedienungspersonen, die die Pflanztröge jeweils an ihrem Ende ergreifen, auf das Tischgestell aufgesetzt werden.

Aus der gattungsbildenden DE-A-2732982 ist eine Vorrichtung zum Verschieben bzw. Versetzen von Pflanzenbehältern längs der Stützrahmen innerhalb eines Gewächshauses bekannt, wobei die Pflanztröge auf den Stützrahmen verfahrbar gelagert sind. Zu diesem Zweck sind auf den Oberseiten der Stützrahmen wagenähnliche Läufer kugelgelagert vorgesehen, wobei auf ein Läuferpaar zwei Pflanztröge aufgestellt werden können. Hierdurch wird eine recht aufwendige Konstruktion benötigt, die insbesondere in einem Gewächshaus im Bereich der Pflanztröge sehr schmutzempfindlich ist. Durch die Größe der wagenähnlichen Läufer wird der Abstand der Pflanztröge voneinander definiert und ein Auseinanderziehen der Pflanztröge in Abhängigkeit der Größe des Wuchses der Pflanze ist hierbei nicht möglich.

Der Erfindung liegt die Aufgabe zugrunde, die gattungsbildende Einrichtung dahingehend zu verbessern, daß einerseits der Aufwand verringert wird, die Pflanztröge fest auf die Stützrahmen aufstellbar sind und eine möglichst unkomplizierte Handhabung der Verfahreinrichtung erreicht wird.

Diese der Erfindung zugrundeliegende Aufgabe wird durch die Lehre des Patentanspruches 1 gelöst.

Vorteilhafte Ausgestaltungen sind in den Unteransprüchen erläutert.

Mit anderen Worten ausgedrückt, schlägt die Erfindung vor, innerhalb des Tischgestells einen Transportwagen anzuordnen, der in Längsachse des Tischgestells und quer zur Längsachse der Pflanztröge verschiebbar ist. Dieser Transportwagen ist mit einem Stützgestell ausgerüstet, das einerseits unter die Oberkante des Tischgestells oder der Stützrahmen abgesenkt werden kann und das andererseits über die Oberkante der Stützrahmen angehoben werden kann. Auf dieses Stützgestell können, wenn das Stützgestell sich in der oberen Stellung befindet, die Pflanztröge aufgesetzt werden und sind dabei mit ihrer Unterkante von der Oberkante der Stützrahmen frei. Die so auf den Transportwagen aufgesetzten Pflanztröge können dann ohne Berührung mit der Oberkante der Stützrahmen hin und her verfahren werden, d.h. dem Gärtner ist es möglich, die Pflanztröge nach Beschicken mit den entsprechenden Pflanzen auf das hochgestellte Stützgestell des Transportwagens aufzuschieben und wenn eine bestimmte Anzahl von Pflanztrögen auf dem Transportwagen gelagert ist, nunmehr diese Pflanztröge durch Verschieben des Transportwagens an den gewünschten Aufstellort auf dem Tischgestell zu verschieben. Hier wird dann das Stützgestell abgesenkt, die Pflanztröge gelangen auf die Stützrahmen und sind somit sicher gelagert. Es ist also nur noch die Bedienung durch eine Person notwendig.

In Weiterbildung dieses grundsätzlichen Gedankens gemäß der Erfindung wird dann vorgeschlagen, daß das Stützgestell mit einem Scherengestänge kombiniert ist, das es ermöglicht, daß die Pflanztröge quer zur Längsachse der Stützrahmen auseinandergezogen werden, so daß damit in Abhängigkeit des Pflanzenwuchses in den Pflanztrögen und damit des Raumes, den die in den Pflanztrögen befindlichen Pflanzen benötigen, eine Abstandseinstellung der Pflanztröge voneinander möglich wird. Durch die erfindungsgemäße Anordnung wird die bisher zeit- und personalaufwendige Verschiebung der Pflanztröge auf dem Tischgestell vereinfacht.

Über den gattungsbildenden Stand der Technik hinaus ist es bekannt, (EP-A-142643) Pflanzentröge verfahrbar zu lagern, indem die Pflanzentröge auf entsprechende, mit Laufrädern ausgerüstete Transportwagen aufgesetzt werden. Hierdurch wird die Handhabung der Pflanzen in ihren Pflanztrögen in Bezug auf den Güterumschlag rationeller gestaltet.

Aus der DE-A-2931048 ist es bekannt, in Abhängigkeit des Pflanzenwachstums die Pflanzen bzw. die die Pflanzen aufnehmenden Pflanztröge in ihrem Abstand voneinander zu vergrößern. Hierzu werden Schneckengetriebe vorgeschlagen, die mit den Pflanzentrögen zusammenwirken und durch deren Betätigung ein Auseinanderziehen der Pflanzentröge möglich ist.

Aus dem DE-GM 6908191 ist es bei Arbeitswagen für Gewächshäuser bekannt, diese Arbeitswagen mit Lauf- und Spurrollen auszurüsten, wobei sich die Laufrollen auf der Oberfläche der Randkanten von Beettischen abstützen, während sich die Spurrollen an den Seitenflächen zweier benachbarter Beettische führen. Hierdurch wird eine saubere und korrekte Führung der Arbeitswagen erreicht.

Schließlich ist es aus der DE-Z "Gb + Gw", 40/1986 bekannt, Scherengestänge einzusetzen, um in entsprechende Aufnahmevorrichtungen eingesetzte Pflanztöpfe zu transportieren und mit gleichem oder ggf. verändertem Abstand wieder abzusetzen.

Ein Ausführungsbeispiel der Erfindung wird nachfolgend anhand der Zeichnungen erläutert. Die Zeichnungen zeigen dabei in

2

Fig. 1    in relativ kleinem Maßstab die Anordnung der Stützrahmen des Tischgestells und der abgesetzten Pflanztröge und des innerhalb der Stützrahmen verfahrbaren Transportwagens, in

Fig. 2    die durch das hochgestellte Stützgestell des Transportwagens verfahrbaren Pflanztröge, in

Fig. 3    die durch die Wirkung des Scherengestänges auseinandergezogenen Pflanztröge und in

Fig. 4    in größerem Maßstab den Aufbau des Transportwagens mit dem zugehörigen Scherengestänge.

In den Zeichnungen ist mit 1 ein Teil eines Tischgestelles bezeichnet, das im wesentlichen durch zwei Stützrahmen 3 und 4 gebildet wird. Die Oberkante 7 dieser Stützrahmen dient der Aufnahme von Pflanztrögen 2.

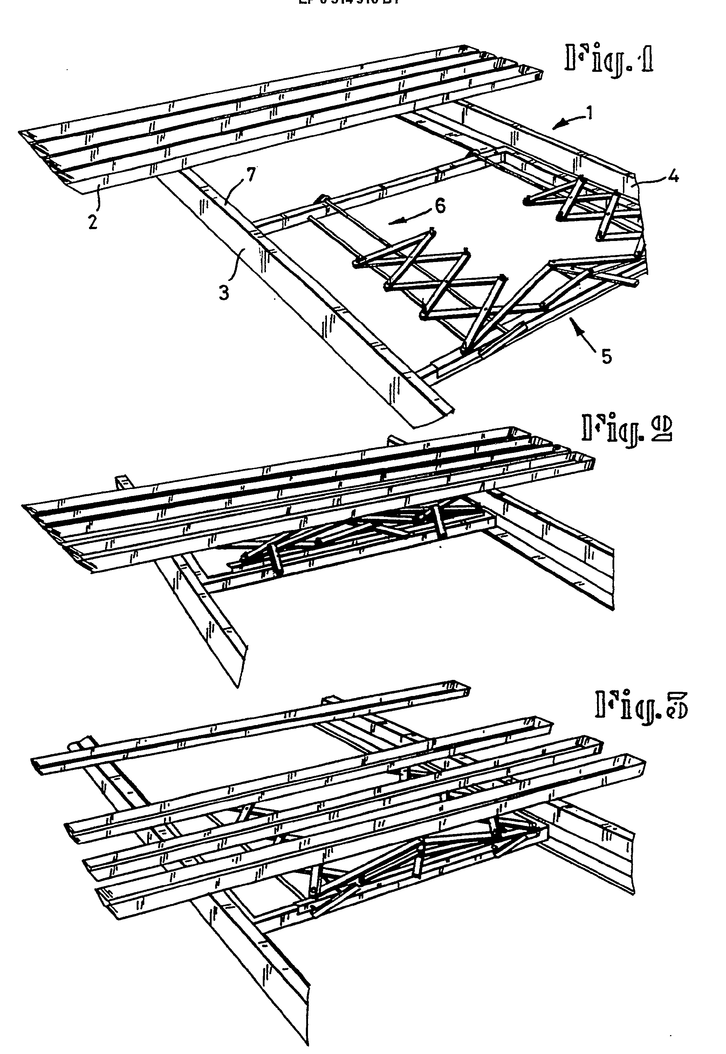

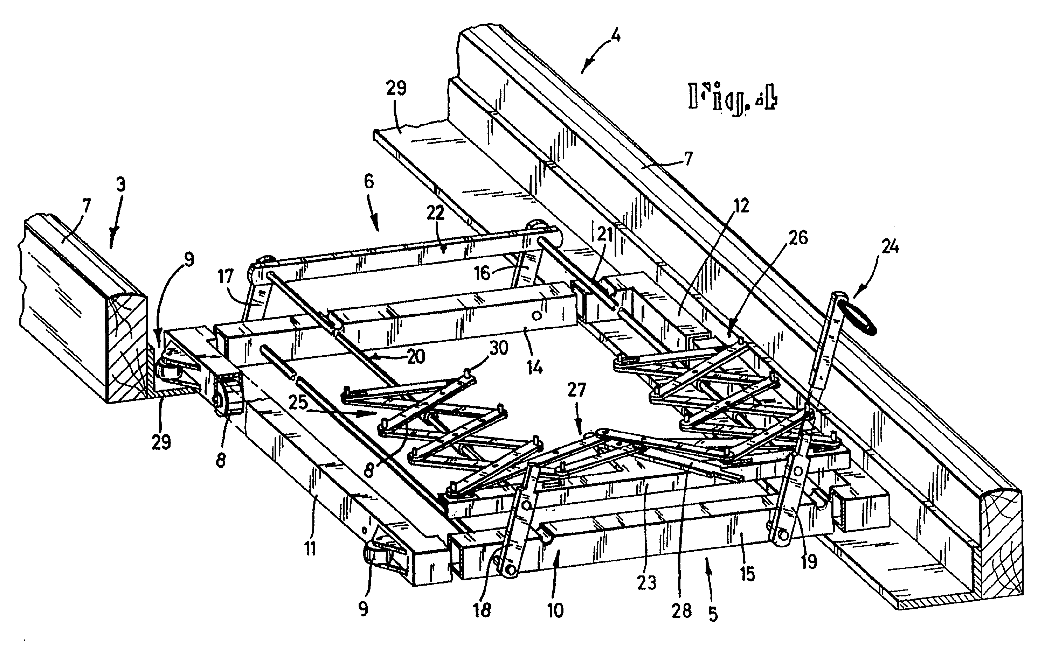

Innerhalb des Tischgestelles 1 ist ein Transportwagen 5 verfahrbar angeordnet, der ein Stützgestell 6 aufweist, das in eine abgesenkte Stellung (Fig. 1) oder in eine hochgestellte Stellung (Fig. 2 und 4) verstellbar ist.

Die Ausbildung dieses Transportwagens geht deutlicher aus Fig. 4 hervor.

Der Transportwagen 5 besteht bei dem dargestellten Ausführungsbeispiel im wesentlichen aus einem Rahmengestell 10, das zwei parallel zu den Stützrahmen 3 und 4 verlaufende Rahmenstreben 11 und 12 aufweist und zwei quer zu den Stützrahmen 3 und 4 verlaufende Rahmenstreben 14 und 15 besitzt, die miteinander zu einem tragfähigen Viereck fest verbunden sind. An den Rahmenstreben 11 und 12 sind Laufräder 8 angeordnet, die sich beispielsweise auf entsprechenden Flanschen 29 der Stützrahmen 3 und 4 abstützen und dabei um horizontale Achsen umlaufen. Zusätzliche Führungsräder 9 laufen um vertikale Achsen um und stützen sich an den Vertikalschenkeln der Flansche 29 ab, so daß der so gebildete Transportwagen 5 auch bei seitlichem Druck leicht und sicher in den Stützrahmen 3 und 4 läuft. In dem aus den Rahmenstreben 11, 12 bzw. 14, 15 gebildeten Transportwagen 5 ist das Stützgestell 6 angeordnet, das im wesentlichen aus den an den Rahmenstreben 14 und 15 angeordneten Schwenklaschen 16 und 17 bzw. 18 und 19 besteht, die an ihrem unteren Ende schwenkbar an den Rahmenstreben gelagert sind und an ihrem unteren Ende schwenkbar Tragstäbe 20 und 21 aufweisen, die der eigentlichen Aufnahme der Pflanztröge 2 dienen. Die Schwenklaschen 16 und 17 sind über einen Lenker 22 verbunden und die Schwenklaschen 18 und 19 über einen Lenker 23.

Die beiden vorderen Schwenklaschen 18 und 19 sind dabei so ausgebildet, daß sie einen Betätigungsgriff 24 aufnehmen können, mit dem es möglich ist, die Schwenklaschen 18 und 19 um ihre drehbare Lagerungan den Rahmenstreben 14 und 15 nach unten oder oben zu schwenken, so daß dadurch die Tragstäbe 20 und 21 z.B. in eine Hochstellung gelangen, in der die Oberkante der Tragstäbe höher als die Oberkante der Stützrahmen 3 und 4 liegt. In der abgesenkten Stellung liegt die Oberkante der Tragstäbe 20, 21 unter der Oberkante der Stützrahmen 3 und 4.

Die auf die Tragstäbe 20 und 21 aufgesetzten Pflanztröge 2 können somit von ihrer Berührung mit der Oberkante 7 der Stützrahmen 3 und 3 freigehoben werden und damit mit dem Transportwagen 5 verfahren werden.

Zusätzlich tragen die Tragstäbe 20 und 21 verschiebbar je ein Scherengestänge 25 und 26, die beide über ein Lenkerparallelogramm 27 miteinander verbunden sind, wobei an dem Lenkerparallelogramm 27 ein Stellhebel 28 anschließt, bei dessen Betätigung die Scheren der Scherengestänge 25 und 26 aus- oder eingefahren werden können. Der Stellhebel 28 ist dabei so ausgebildet, daß der Betätigungsgriff 24 auch an ihn angeschlossen werden kann.

Werden die Pflanztröge 2 auf das Scherengestänge aufgestellt, ist es ersichtlich, daß durch Betätigen des Scherengestänges über den Stellhebel 28 die Pflanztröge auseinander- oder zusammengefahren werden können und daß dadurch der Abstand zwischen den Pflanztrögen regelbar ist, so wie dies besonders deutlich aus Fig. 3 der Zeichnung ersichtlich ist. Aus der Darstellung in Fig. 4 ist erkennbar, daß die Gelenkpunkte der Laschen des Scherengestänges mit nach oben vorstehenden Widerlagerstutzen 30 ausgerüstet sind, durch die beim Ausfahren des Scherengestänges die sich auf dem Scherengestänge befindlichen Pflanztröge bewegt werden.

## Patentansprüche

1. Pflanztisch für Gartenbaubetriebe mit einem Tischgestell (1) mit langgestreckt ausgebildete Pflanztröge (2) verfahrbar tragenden Stützrahmen (3, 4), die quer zur Längserstreckung der Pflanztröge (2) ausgerichtet sind, gekennzeichnet durch einen zwischen den Stützrahmen (3, 4) sich über um horizontale Achsen umlaufende Laufräder (8) an den Stützrahmen (3, 4) abstützenden Transportwagen (5) und ein von dem Transportwagen (5) heb- und senkbar getragenes Stützgestell (6), dessen Oberkante in der abgesenkten Stellung unter der Oberkante (7) der Stützrahmen (3, 4) und in der angehobenen Stellung oberhalb der Oberkante (7) der Stützrahmen (3, 4) liegt.

2. Pflanztisch nach Anspruch 1, gekennzeichnet durch von dem Transportwagen (5) um vertikale Achsen umlaufend getragene Führungsräder (9), die sich an den Stützrahmen (3, 4) anlegen.

3. Pflanztisch nach Anspruch 1 oder 2, dadurch gekennzeichnet, daß der Transportwagen (5) aus einem Rahmengestell (10) gebildet ist, das an zwei parallel zu den Stützrahmen (3, 4) verlaufenden Rahmenstreben (11, 12) die Laufräder (8) und die Führungsräder (9) trägt und an zwei quer zu den Stützrahmen (3, 4) verlaufenden Rahmenstreben (14, 15) das Stützgestell (6) schwenkbar trägt.

4. Pflanztisch nach einem oder mehreren der vorhergehenden Ansprüche, dadurch gekennzeichnet, daß das Stützgestell durch vier Schwenklaschen (16, 17 ; 18, 19) gebildet wird, die einerseits schwenkbar an den Rahmenstreben (14, 15) gelagert sind, andererseits schwenkbar über zwei parallel zu den Stützrahmen verlaufende Tragstäbe (20, 21) verbunden sind, die ihrerseits wieder über Lenker (22 und 23) miteinander und den Schwenklaschen (16, 17) bzw. (18, 19) verbunden sind.

5. Pflanztisch wenigstens nach Anspruch 4, dadurch gekennzeichnet. daß die Schwenklaschen (18, 19) zur Aufnahme eines Betätigungsgriffes (24) ausgebildet sind.

6. Pflanztisch nach Anspruch 5, dadurch gekennzeichnet, daß der Betätigungsgriff (24) entweder an die Schwenklasche (18) oder an die Schwenklasche (19) anschließbar ist.

7. Pflanztisch nach einem oder mehreren der vorhergehenden Ansprüche, gekennzeichnet durch ein auf den Trägstäben (20, 21) in Längsachse der Tragstäbe (20, 21) verschiebbar gelagertes Scherengestänge (25, 26), das aus einer nur einen Teil der Länge der Tragstäbe (20, 21) beanspruchenden eingefahrenen Stellung in eine ausgefahrene Stellung verstellbar ist.

8. Pflanztisch nach Anspruch 7, dadurch gekennzeichnet, daß die beiden Scherengestänge (25, 26) über ein Lenkerparallelogramm (27) miteinander verbunden sind und das Lenkerparallelogramm (27) einen Stellhebel (28) aufweist, durch dessen Betätigung die beiden Scherengestänge (25, 26) in die zusammengezogene oder in die ausgefahrene Stellung bringbar sind.

9. Pflanztisch nach Anspruch 7 und 8, dadurch gekennzeichnet, daß der Stellhebel (28) zur Aufnahme des Betätigungsgriffes (24) ausgebildet ist.


## Claims

1. A plant table for horticultural businesses, comprising a table frame (1) with supporting structures (3, 4) displaceably carrying elongate plant troughs (2), which supporting structures (3, 4) are oriented in transverse relation to the longitudinal extension of the plant troughs (2), characterized by a transport car (5) between the supporting structures (3, 4) supporting itself on the supporting structures (3, 4) by means of running wheels (8) rotating about horizontal axes and a supporting frame (6) carried by the transport car (5) in a raisable and lowerable manner, the upper edge of which supporting frame (6) lies in the lowered position below the upper edge (7) of the supporting structures (3, 4) and in the raised position above the upper edge (7) of the supporting structures (3, 4).

2. A plant table according to claim 1, characterized by guide wheels (9) carried by the transport car (5) and rotating about vertical axes, which guide wheels (9) lie against the supporting structures (3, 4).

3. A plant table according to claim 1 or claim 2, characterized in that the transport car (5) is formed of a rack (10) which carries the running wheels (8) and the guide wheels (9) on two frame braces (11, 12) running parallel to the supporting structures (3, 4) and swivellably carries the supporting frame (6) on two frame braces (14, 15) running transversely to the supporting structures (3, 4).

4. A plant table according to one or more of the preceding claims, characterized in that the supporting frame is formed of four swivel brackets (16, 17 ; 18, 19) which on the one hand are accommodated swivellably on the frame braces (14, 15), and on the other hand are connected swivellably via two carrying rods (20, 21) running parallel to the supporting structures, which carrying rods (20, 21) are in turn connected with each other and the swivel brackets (16, 17 and 18, 19) by means of connecting rods (22 and 23).

5. A plant table according at least to claim 4, characterized in that the swivel brackets (18, 19) are constructed to accommodate an operating handle (24).

6. A plant table according to claim 5, characterized in that the operating handle (24) can be connected either to the swivel bracket (18) or to the swivel bracket (19).

7. A plant table according to any one or more of the preceding claims, characterized by a lattice rod assembly (25, 26) accommodated on the carrying rods (20, 21) to be displaceable along the longitudinal axes of the carrying rods (20, 21), said lattice rod assembly (25, 26) being adjustable from an "in" position using only part of the length of the carrying rods (20, 21) to an "out" position.

8. A plant table according to claim 7, characterized in that the two lattice rod assemblies (25, 26) are connected together by means of a connecting rod parallelogram (27) and in that the connecting rod parallelogram (27) comprises an adjusting lever (28) whose operation brings the two lattice rod assemblies (25, 26) into the contracted or the extended position.

9. A plant table according to claim 7 and claim 8, characterized in that the adjusting lever (28) is constructed to accommodate the operating handle (24).

**Revendications**

1. Table à plantes pour exploitations horticoles comprenant un bâti de table (1) muni lui-même de cadres supports (3, 4) portant, mobiles en translation, des bacs à plantes (2) de configuration allongée, ces cadres étant orientés transversalement à la direction longitudinale des bacs à plantes (2), caractérisée par un chariot de transport (5) disposé entre les cadres supports (3, 4) et qui prend appui sur les cadres supports (3, 4) par l'intermédiaire de roulettes de roulement (8) qui tournent sur des axes horizontaux, et un chevalet support (6) monté mobile en élévation et descente sur le chariot de transport (5), dont le bord supérieur se trouve au-dessous du bord supérieur (7) des cadres supports (3, 4) dans sa position abaissée et au-dessus du bord supérieur (7) des châssis supports (3, 4) dans la position relevée.

2. Table à plantes selon la revendication 1, caractérisée par des roulettes de guidage (9) portées par le chariot de transport (5) et qui tournent autour d'axes verticaux, et qui prennent appui contre les cadres supports (3, 4).

3. Table à plantes selon l'une des revendications 1 et 2, caractérisée en ce que le chariot de transport (5) est formé d'un châssis de cadre (10) qui porte, sur deux barres de cadre (11, 12) qui s'étendent parallèlement aux cadres supports (3, 4), les roulettes de roulement (8) et les roulettes de guidage (9) et qui porte le chevalet support (6) sur deux barres (14, 15) du cadre qui s'étendent transversalement aux cadres supports (3, 4).

4. Table à plantes selon une ou plusieurs des revendications précédentes, caractérisé en ce que le chevalet support est formé de quatre biellettes oscillantes (16, 17 ; 18, 19) qui, d'une part, sont montées pour osciller sur les barres (14, 15) du cadre et, d'autre part, sont reliées, avec possibilité d'oscillation, par deux tringles porteuses (20, 21) s'étendant parallèlement aux cadres supports et qui, de leur côté, sont reliées par des biellettes (22 et 23) à la fois l'une à l'autre et aux biellettes oscillantes (16, 17) ou (18, 19) respectivement.

5. Table à plantes au moins selon la revendication 4, caractérisée en ce que les biellettes oscillantes (18, 19) sont construites pour recevoir une poignée de manoeuvre (24).

6. Table à plantes selon la revendication 5, caractérisée en ce que la poignée de manoeuvre (24) peut être fixée, soit à la biellette oscillante (18), soit à la biellette oscillante (19).

7. Table à plantes selon une ou plusieurs des revendications précédentes, caractérisée par une tringlerie à ciseaux (25, 26) montée pour coulisser sur les tringles porteuses (20, 21) selon l'axe longitudinal des tringles porteuses (20, 21), et qui peut être déplacée, d'une position rétractée, qui n'occupe qu'une partie de la longueur des tringles porteuses (20, 21), à une position d'extension.

8. Table à plantes selon la revendication 7, caractérisée en ce que les deux tringleries à ciseaux (25, 26) sont reliées l'une à l'autre par un parallélogramme déformable (27) et le parallélogramme déformable (27) présente un levier de commande (28) par la manoeuvre duquel les deux tringleries à ciseaux (25, 26) peuvent être placées dans leur position rétractée ou dans leur position d'extension.

9. Table à plantes selon la revendication 7 ou 8, caractérisée en ce que le levier de commande (28) est construit pour recevoir une poignée de manoeuvre (24).

Fig. 1

Fig. 2

Fig. 3

Fig. 4

EP 0 314 916 B1